# EUROPÄISCHE PATENTANMELDUNG

(11) **EP 2 028 400 A2**
(43) Veröffentlichungstag der Anmeldung: **25.02.2009**
(21) Anmeldenummer: 08162699.6
(22) Anmeldetag: 20.08.2008
(51) Int. Cl.: F16K 11/07

(54) **Pneumatisches Wegeventil mit einem reibungsarmen Ventilschieber**

(30) Priorität: 22.08.2007 DE 102007039664
(71) Anmelder: Robert Bosch GmbH, 70442 Stuttgart (DE)
(72) Erfinder: Rose, Jochen, 71701, Schwieberdingen (DE); Bergmann, Klaus, 70499, Stuttgart (DE)
(74) Vertreter: Kietzmann, Lutz

(57) **Zusammenfassung**

Pneumatisches Wegeventil zum Schalten eines Druckluftflusses zwischen mehreren, an einem Ventilgehäuse (1) angeordneten äußeren Anschlüssen (P, A, R) mittels eines mehrere Abschnitte unterschiedlichen Durchmessers aufweisenden Ventilschiebers (3), der über endseitige dynamische Dichtringe (6, 7,) reibungsarm in eine Schieberbohrung (2) des Ventilgehäuses (1) eingesetzt und über mindestens einen an einer Stirnseite angeordneten Steuerkolben (5) axial bewegbar ist, weil der Ventilschieber (3) zur Führung in der Schieberbohrung (2) an dem dem Steuerkolben (5) abgewandten Ende einen mit einer Kanalstruktur (10) versehenen und in Innenrichtung verlängerten Abschnitt (9a) größeren Durchmessers aufweist, der außenseitig einen ersten dynamischen Dichtring (6) trägt.

## Beschreibung

Die vorliegende Erfindung betrifft ein pneumatisches Wegeventil zum Schalten eines Druckluftflusses zwischen mehreren, an einem Ventilgehäuse angeordneten äußeren Anschlüssen mittels eines mehrere Abschnitte unterschiedlichen Durchmessers aufweisenden Ventilschiebers, der über endseitige dynamische Dichtringe reibungsarm in eine Schieberbohrung des Ventilgehäuses eingesetzt und über mindestens einen an einer Stirnseite angeordneten Steuerdruckkolben axial bewegbar ist.

Baurreihen pneumatischer Wegeventile umfassen gewöhnlich eine große Palette unterschiedlicher Ventilfunktionen, welche je nach den Anforderungen des pneumatischen Systems gewählt werden. So sind in monostabilen und bistabilen Varianten unter anderem 2x3/2-, 5/2- und 5/3-Ventilfunktionen erhältlich. Da innerhalb eines pneumatischen Systems eine Vielzahl einzelner Wegeventile mit ganz unterschiedlichen Ventilfunktionen erforderlich sind, werden diese gewöhnlich innerhalb einer kompakten Ventileinheit örtlich zusammengefasst angeordnet. Dies setzt in etwa gleiche Außenabmessungen der Ventilgehäuse trotz unterschiedlicher Ventilfunktionen voraus. Die verschiedenen Ventilfunktionen werden vornehmlich durch verschiedenartige Ventilschieber realisiert. Dem Wunsch einer möglichst kompakten Bauweise sind jedoch technische Grenzen gesetzt. Denn es sind andererseits möglichst hohe Durchflussraten gewünscht und der zum Schalten des Ventilschiebers erforderliche Vorsteuerdruck muss ausreichend groß sein, damit sich der Ventilschieber sicher von einer Schaltposition in eine andere Schaltposition bewegen lässt.

Aus der DE 10 2005 003 982 A1 geht ein gattungsgemäßes pneumatisches Wegeventil hervor, welches diese Problematik dadurch löst, dass der am Ventilschieber angebrachte Steuerkolben über einen rückwärtigen Abschnitt auch als Verschlusskörper für einen Ventilsitz zum Schalten des Druckluftflusses dient. Insgesamt ermöglicht diese Lösung, dass lediglich zwei Dichtringe erforderlich sind, um einen steuerdruckbeaufschlagten Ventilschieber zur Ausführung einer 2/3-Ventilfunktion in der Schieberbohrung anzuordnen. Dank des lokalen Ventilsitzprinzips wird eine leistungszehrende Haftreibung zwischen Dichtung und Ventilgehäuse an dieser Stelle reduziert, so dass sich der Ventilschieber mit weniger Vorsteuerdruck sicher betätigen lässt.

Zwar stellt diese technische Lösung ein reibungsarmes pneumatisches Wegeventil zur Verfügung, jedoch arbeitet dieses nicht völlig überschneidungsfrei. Dies bedeutet, dass beispielsweise in Zwischenstellungen zwischen den definierten Schaltpositionen des Ventilschiebers der Speisedruckanschluss, der Arbeitsanschluss und der Entlüftungsanschluss kurz miteinander in Verbindung kommen. Weiterhin müssen besondere Maßnahmen zur Führung des Ventilschiebers entlang seines axialen Bewegungsweges getroffen werden. Zu diesem Zwecke weist der Ventilschieber hier steuerkolbenseitig einen Verlängerungsansatz auf, der in einer korrespondierenden Grundbohrung seitens eines Ventildeckels geführt ist. Dieses Führungsprinzip ist auch am gegenüberliegenden Ende des Ventilschiebers verwirklicht, an welchem in der monostabilen Variante eine Rückstellfeder koaxial zu einem Führungszapfen angeordnet ist.

Es ist die Aufgabe der vorliegenden Erfindung, ein pneumatisches Wegeventil mit einem reibungsarmen Ventilschieber zu schaffen, welcher mit einer einfachen und zuverlässigen Schieberführung ausgestattet ist und ein überschneidungsfreies Schalten gestattet.

Die Aufgabe wird ausgehend von einem pneumatischen Wegeventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass der Ventilschieber zur Führung in der Schieberbohrung an dem dem Steuerkolben abgewandten Ende einen mit einer Kanalstruktur versehenen und in Innenrichtung verlängernden Abschnitt größeren Durchmessers aufweist, der außenseitig einen ersten dynamischen Dichtring trägt.

Der Vorteil der erfindungsgemäßen Lösung liegt insbesondere darin, dass durch den speziellen Abschnitt der Ventilschieber an mindestens zwei Punkten entlang seines Verstellweges geführt bleibt, obwohl der Dichtring in der eingefahrenen Stellung keinen Kontakt mehr mit dem Ventilgehäuse hat. Dieses rührt daher, dass die ventilinternen Strömungskanäle durch einen mittigen Abschnitt geringeren Durchmessers des Ventilschiebers in Zusammenwirken mit kammerartigen Ringbereichen seitens des Ventilgehäuses gebildet sind. Trotz dieser Strömungskanalstruktur bleibt der erfindungsgemäße Ventilschieber stets geführt. Durch die Kanalstruktur stört die Führung des Ventilschiebers nicht das erforderliche Vorbeiströmen von Druckluft. Weiterhin wird mit dieser Lösung die bauliche Voraussetzung für ein überschneidungsfreies Schalten des erfindungsgemäßen Wegeventils geschaffen.

Vorzugsweise kann der erste dynamische Dichtring, welcher an dem dem Steuerkolben abgewandten Ende des Ventilschiebers angeordnet ist, nach Art eines einfachen O-Rings ausgebildet sein. Dieser erste dynamische Dichtring bildet das Verschlusselement eines Schieberventils.

Dagegen ist gemäß einer der Erfindung verbessernden Maßnahme der Ventilschieber seitens des Steuerkolbens nach Art eines Sitzventils ausgebildet. Zu diesem Zwecke kommt als zweiter dynamischer Dichtring ein Lippendichtring zum Einsatz. Der Lippendichtring bildet über einen rückwärtigen Stirnbereich das Verschlusselement des Sitzventils, dessen korrespondierender Ventilsitz seitens des Ventilgehäuses angeformt ist. Im Sinne einer Funktionsintegration dient der zweite dynamische Dichtring gleichzeitig über eine außenradiale Dichtlippe der Abdichtung des Steuerkolbens.

Gemäß einer weiteren, die Erfindung verbessernden Maßnahme ist vorgesehen, dass der zweite dynamische Dichtring auf einen in Innenrichtung verlängernden Abschnitt größeren Durchmessers des Ventilschiebers montiert ist. Dieser verlängerte Abschnitt ist in der Länge derart bemessen, dass im Zusammenwirken mit dem benachbarten äußeren Anschluss ein überschneidungsfreies Schalten des Druckluftflusses zwischen den beiden endseitigen Schaltpositionen möglich ist. Es wird hierdurch also verhindert, dass ungewollt beispielsweise der Speisedruckanschluss direkt mit dem Entlüftungsanschluss in Verbindung kommt.

Der verlängerte Abschnitt an dem dem Steuerkolben gegenüberliegenden Ende des Ventilschiebers kann auch beidseits des Dichtrings ausgebildet sein. Durch die hierdurch gewonnene weitere Verlängerung in Außenrichtung kann der Ventilschieber auch an dieser Stelle über korrespondierende Bohrungen im Ventilgehäuse bei Bedarf geführt werden. Auch diese Verlängerung ist mit der erfindungsgemäßen Kanalstruktur zu versehen.

Vorzugsweise besteht die Kanalstruktur aus mehreren entlang des Umfangs verteilten Längsschlitzen. Die Längsschlitze enden vorzugsweise kurz vor dem Dichtring, damit dieser exakt und entlang seines Umfangs an jeder Stelle in einer korrespondierenden Nut des Ventilschiebers geführt ist. Es ist natürlich auch denkbar, die Längsschlitze unter Inkaufnahme des vorstehend dargestellten Nachteils bis hin zur Nut für die Aufnahme des Dichtrings auszubilden. Diese alternative Ausführungsform lässt sich spritztechnisch relativ einfacher fertigen.

Die Längsschlitze des Abschnitts größeren Durchmessers werden vorzugsweise durch einen symmetrisch sternförmigen Querschnittsbereich des Abschnitts größeren Durchmessers am Ventilschieber gebildet. Somit können die Längsschlitze in Form von Sektoren ausgebildet sein. Daneben ist es auch möglich, die Längsschlitze jeweils nutartig auszubilden, so dass diese zueinander sternförmig verlaufend um den Umfang des geschlitzten Abschnitts des Ventilschiebers verteilt sind. Gemäß einer weiteren Ausführungsform der Längsschlitze können diese auch parallel zueinander verlaufend ausgebildet werden. Diese alternative Ausführungsform lässt sich besonders einfach spritztechnisch fertigen.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig.1: einen teilweise Längsschnitt eines pneumatischen Wegeventils mit einem reibungsarmen Ventilschieber in einer ersten Schaltstellung,
- Fig.2: einen teilweise Längsschnitt eines pneumatischen Wegeventils mit einem reibungsarmen Ventilschieber in einer Schaltzwischenstellung,
- Fig.3: einen teilweise Längsschnitt eines pneumatischen Wegeventils mit einem reibungsarmen Ventilschieber in einer zweiten Schaltstellung,
- Fig.4: einen Längsschnitt eines Ventilschiebers in einer ersten Ausführungsform,
- Fig.5: einen Längsschnitt eines Ventilschiebers in einer zweiten Ausführungsform,
- Fig.6: eine perspektivische Ansicht eines mit einer Kanalstruktur versehenen Abschnitts des Ventilschiebers,
- Fig.7a: einen Querschnitt durch den mit Kanalstruktur versehenen Abschnitt des Ventilschiebers in einer ersten Ausführungsform,
- Fig.7b: einen Querschnitt durch den mit Kanalstruktur versehenen Abschnitt des Ventilschiebers in einer zweiten Ausführungsform, und
- Fig.7c: einen Querschnitt durch den mit Kanalstruktur versehenen Abschnitt des Ventilschiebers in einer dritten Ausführungsform.

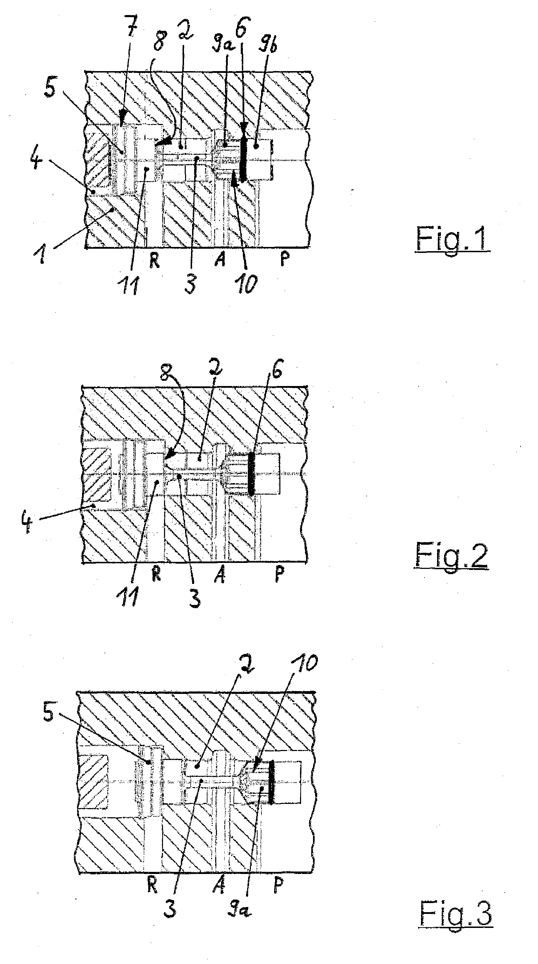

Gemäß Fig.1 sind an einem Ventilgehäuse 1 mehrere äußere Anschlüsse in Form eines Speisedruckanschlusses P, eines Arbeitsanschlusses A sowie eines Entlüftungsanschlusses R angeordnet. In einer Schieberbohrung 2 des Ventilgehäuses 1 arbeitet ein Ventilschieber 3 als Schaltglied.

Der Ventilschieber 3 wird über eine Steuerkammer 4 mit einem Steuerdruck beauschlagt. Zu diesem Zwecke weist der Ventilschieber 3 einen Steuerkolben 5 auf.

Zu beiden Enden des Ventilschiebers 3 ist hier ein dynamischer Dichtring 6 bzw. 7 angeordnet, um den Ventilschieber 3 reibungsarm gegenüber der Schieberbohrung zu lagern. Der erste dynamische Dichtring 6 ist nach Art eines im Querschnitt gesehen 8-förmigen Dichtrings ausgebildet. Der zweite dynamische Dichtring 7 ist dagegen ein Lippendichtring der sowohl die Dichtung des Steuerkolbens 5 bildet als auch über einen rückwärtigen Stirnbereich 8 als Verschlusselement eines Sitzventils dient.

An dem dem Steuerkolben 5 abgewandten Ende besitzt der Ventilschieber 3 einen in Innenrichtung verlängerten Abschnitt 9a relativ größeren Durchmessers, der mit einer Kanalstruktur 10 versehen ist. Der Abschnitt 9a dient der Führung des Ventilschiebers 3 entlang des Schaltweges. Die Kanalstruktur 10 des Abschnitts 9a besteht aus mehreren entlang des Umfangs verteilten Längsschlitzen, welche an nachfolgender Stelle eingehender erläutert werden.

Neben dem Abschnitt 9a größeren Durchmessers ist im Endbereich des Ventilschiebers 3 ein weiterer Abschnitt 9b größeren Durchmessers vorgesehen, der sich in Außenrichtung verlängert, so dass die Abschnitte 9a und 9b den Dichtring 6 beidseits begrenzen.

In der gezeigten anfänglichen Schaltstellung mit unbelüfteter Steuerkammer 4 sperrt die dynamische Dichtung 6 den Durchfluss zwischen den Anschlüssen P und A, also die Belüftung des Arbeitsanschlusses. Da der Stirnbereich 8 nicht gegen das Ventilgehäuse 1 zur Anlage kommt, ist der Weg zwischen den Anschlüssen A und R geöffnet, so dass sich das Ventil in der Entlüftungsstellung befindet.

Die Fig.2 zeigt das Wegeventil während des Schaltvorgangs. Der Ventilschieber 3 bewegt sich in Folge Belüftung der Steuerkammer 4. Da der Abschnitt 11 bereits in die Schieberbohrung 2 eintaucht, wogegen der dynamische Dichtring 6 noch dichtend an der Schieberbohrung zur Anlage kommt, kann ein quasi überschneidungsfreies Schalten erfolgen.

Bei der in Fig.3 dargestellten anderen Schaltstellung ist das seitens des Steuerkolbens 5 ausgebildete Sitzventil geschlossen, so dass die Anschlüsse A und R voneinander abgesperrt sind. Dagegen besteht ein Druckluftfluss zwischen den Anschlüssen P und A, so dass eine Belüftung des Arbeitsanschlusses erfolgt. In dieser Schaltstellung wird der Ventilschieber 3 über den verlängerten Abschnitt 9a größeren Durchmessers innerhalb der Schieberbohrung 2 geführt, wobei gleichzeitig die hierin eingebrachte Kanalstruktur 10 den Durchfluss ermöglicht.

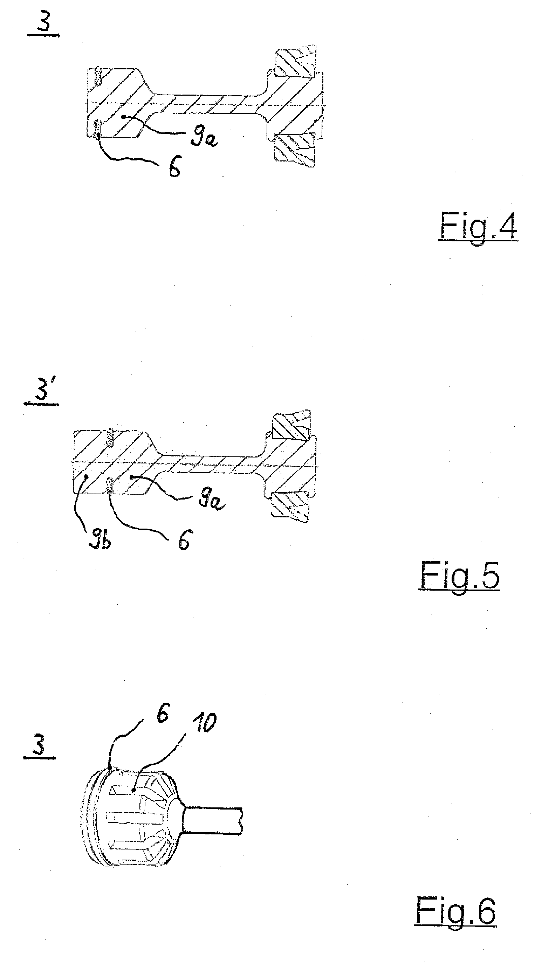

Der in Figur 4 gezeigte Ventilschieber 3 weist lediglich einen in Innenrichtung verlängerten Abschnitt 9a größeren Durchmessers auf, welcher der vorstehend erläuterten Führung des Ventilschiebers 3 dient.

Dagegen weist der in Fig.5 dargestellte Ventilschieber 3' beidseits des dynamischen Dichtrings 6 je einen Abschnitt 9a bzw. 9b größeren Durchmessers auf, um eine erweiterte Führungsfunktion im Zusammenwirken - mit der hier nicht dargestellten - Schieberbohrung zu ermöglichen.

Das in Fig.6 dargestellte eine Ende des Ventilschiebers 3 ist mit einer geschlitzten Kanalstruktur 10 versehen. Die Längsschlitze der Kanalstruktur 10 enden kurz vor dem Dichtring 6.

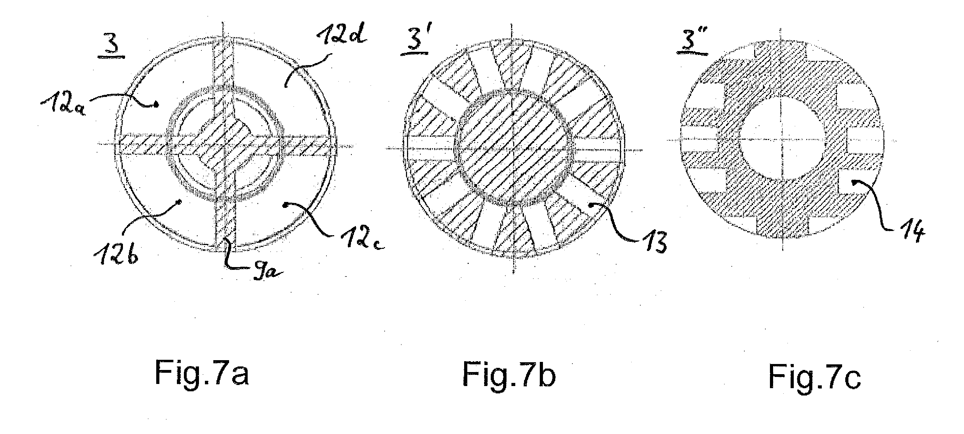

Die in der Fig. 7a dargestellte Kanalstruktur des Ventilschiebers 3 umfasst vier gleich ausgebildete sektorenartige Längsschlitze 12a-12d, welche aus einem symmetrisch sternförmigen Querschnittsbereich des Abschnitts 9a gebildet sind. Die Ausführungsform gemäß Fig.7b wird dagegen aus einzelnen sternförmig in den Ventilschieber 3' eingebrachte Nuten 13 gebildet. Bei der Ausführungsform nach Fig.7c wird die Kanalstruktur beim Ventilschieber 3" durch zueinander parallel verlaufende Nuten 14 gebildet.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, die Kanalstruktur zur endseitigen Führung des Ventilschiebers auf eine andere Art auszubilden, beispielsweise im Form von geschlossenen Kanälen. Weiterhin kann der Ventilschieber auch mit zusätzlichen Dichtringen - je nach der umzusetzenden Ventilfunktion ausgestattet sein.

### Bezugszeichenliste

- **1**: Ventilgehäuse
- **2**: Schieberbohrung
- **3**: Ventilschieber
- **4**: Steuerkammer
- **5**: Steuerkolben
- **6**: Dichtring
- **7**: Dichtring
- **8**: Stirnbereich
- **9**: Abschnitt
- **10**: Kanalstruktur
- **11**: Abschnitt
- **12**: Längsschlitz
- **13**: Nut
- **14**: Nut

## Patentansprüche

1. Pneumatisches Wegeventil zum Schalten eines Druckluftflusses zwischen mehreren, an einem Ventilgehäuse (1) angeordneten äußeren Anschlüssen (P, A, R) mittels eines mehrere Abschnitte unterschiedlichen Durchmessers aufweisenden Ventilschiebers (3), der über endseitige dynamische Dichtringe (6, 7,) reibungsarm in eine Schieberbohrung (2) des Ventilgehäuses (1) eingesetzt und über mindestens einen an einer Stirnseite angeordneten Steuerkolben (5) axial bewegbar ist,
**dadurch gekennzeichnet, dass** der Ventilschieber (3) zur Führung in der Schieberbohrung (2) an dem dem Steuerkolben (5) abgewandten Ende einen mit einer Kanalstruktur (10) versehenen und in Innenrichtung verlängerten Abschnitt (9a) größeren Durchmessers aufweist, der außenseitig einen ersten dynamischen Dichtring (6) trägt.

2. Pneumatisches Wegeventil nach Anspruch 1,
**dadurch gekennzeichnet, dass** der erste dynamische Dichtring (6) nach Art eines im Querschnitt 8-förmigen Dichtrings ausgebildet ist.

3. Pneumatisches Wegeventil nach Anspruch 1,
**dadurch gekennzeichnet, dass** der Ventilschieber (3) seitens des Steuerkolbens (5) nach Art eines Sitzventils schaltet.

4. Pneumatisches Wegeventil nach Anspruch 3,
**dadurch gekennzeichnet, dass** der hierfür vorgesehene zweite dynamische Dichtring (7) zum überschneidungsfreien Schalten des Druckluftflusses auf einen in Innenrichtung verlängerten Abschnitt (11) größeren Durchmessers des Ventilschiebers (3) montiert ist.

5. Pneumatisches Wegeventil nach Anspruch 4,
**dadurch gekennzeichnet, dass** der zweite dynamische Dichtring (7) nach Art eines Lippendichtrings ausgebildet ist.

6. Pneumatisches Wegeventil nach Anspruch 4,
**dadurch gekennzeichnet, dass** ein rückwärtiger Stirnbereich (8) des zweiten dynamischen Dichtrings (7) das Verschlusselement des Sitzventils bildet, dessen korrespondierender Ventilsitz seitens des Ventilgehäuses (1) angeformt ist.

7. Pneumatisches Wegeventil nach Anspruch 1,
**dadurch gekennzeichnet, dass** die Kanalstruktur (10) des Abschnitts (9a) aus mehreren entlang des Umfangs verteilten Längsschlitzen besteht.

8. Pneumatisches Wegeventil nach Anspruch 7,
**dadurch gekennzeichnet, dass** die Längsschlitze (12a bis 12d) aus einem symmetrisch sternförmigen Querschnittsbereich des Abschnitts (9a) gebildet sind.

9. Pneumatisches Wegeventil nach Anspruch 7,
**dadurch gekennzeichnet, dass** die Längsschlitze der Kanalstruktur (10) im Abschnitt (9a) kurz vor dem Dichtring (6) enden.

10. Pneumatisches Wegeventil nach Anspruch 1,
**dadurch gekennzeichnet, dass** der Abschnitt (9b) größeren Durchmessers auch in Außenrichtung verlängert ist, so dass beidseits des Dichtrings (6) Verlängerungen bestehen.
